# EUROPEAN PATENT APPLICATION

(11) **EP 4 580 121 A1**
(43) Date of publication of application: **02.07.2025**
(21) Application number: 23856526.1
(22) Date of filing: 16.08.2023
(51) Int. Cl.: H04L 9/40

(54) **SERVICE REQUEST PROCESSING METHOD AND APPARATUS, AND ELECTRONIC DEVICE AND STORAGE MEDIUM**

(30) Priority: 26.08.2022 CN 202211037837
(71) Applicant: DOUYIN VISION CO., LTD., Beijing 100041 (CN); Lemon Inc., Grand Cayman, KY1-1205 (KY)
(72) Inventor: TANG, Xinqi, Beijing 100028 (CN); GUO, Jia, Los Angeles, California 90066 (US); LI, Yuan, Los Angeles, California 90066 (US); ZHANG, Bei, Los Angeles, California 90066 (US); WANG, Bolun, Beijing 100028 (CN); XU, Hang, Beijing 100028 (CN); MU, Lin, Beijing 100028 (CN); LIN, Yuan, Culver City, California 90230 (US)
(74) Representative: Dentons UK and Middle East LLP
(86) International application number: PCT/CN2023/113405
(87) International publication number: WO 2024/041436

(57) **Abstract**

Embodiments of the present disclosure provide a method, apparatus, electronic device and a storage medium for service request processing, by obtaining a target account that is an account having a risk of initiating an unauthorized request to a target service, the target service having at least two service nodes; determining, based on the target account, a corresponding key service node, the key service node being a service node that has a best interception effect for performing access interception on an unauthorized request initiated by the target account; performing, based on the key service node, access interception on a service request sent by the target account. By evaluating the key service node with better interception effect in the target service, then at the key service node, an access interception is performed on the unauthorized request initiated by the target account.

## Description

### CROSS REFERENCING OF RELATED APPLICATION(S)

The present application claims priority of Chinese Patent Application No. 202211037837.4, entitled "METHOD, APPARATUS, ELECTRONIC DEVICE AND STORAGE MEDIUM FOR SERVICE REQUEST PROCESSING" filed on Aug. 26, 2022, the entirety of which is incorporated herein by reference.

### FIELD

The embodiments of the present disclosure relate to a field of Internet technologies, in particular to a method, apparatus, electronic device and storage medium for service request processing.

### BACKGROUND

Currently, with rapid development of the Internet industry, unauthorized activities such as cyber attacks, information theft, ransomware scams and the like implemented by using Internet technologies are increasing. Various Internet platforms usually set a risk control mechanism to intercept such unauthorized service requests to ensure the security of the content and information in the platform.

In the prior art, the platform usually identified, based on a manual or fixed rule audit mode, an unauthorized request for unauthorized service purposes, and then an unauthorized account sending an unauthorized request is intercepted to prevent such unauthorized accounts from continuing to send unauthorized requests.

### SUMMARY

Embodiments of the present disclosure provide a method, apparatus, electronic device and storage medium for service request processing.

According to a first aspect, an embodiment of the present disclosure provides a method for service request processing, including:
obtaining a target account that is an account having a risk of initiating an unauthorized request to a target service, the target service having at least two service nodes; determining, based on the target account, a corresponding key service node, the key service node being a service node among the at least two service nodes that has a best interception effect for performing access interception on an unauthorized request initiated by the target account; performing, based on the key service node, access interception on a service request sent by the target account.

According to a second aspect, an embodiment of the present disclosure provides an apparatus for service request processing, including:
an obtaining module, configured for obtaining a target account that is an account having a risk of initiating an unauthorized request to a target service, the target service having at least two service nodes;
a determining module, configured for determining, based on the target account, a corresponding key service node, the key service node being a service node among the at least two service nodes that has a best interception effect for performing access interception on an unauthorized request initiated by the target account;
an interception module, configured for performing, based on the key service node, access interception on a service request sent by the target account.

According to a third aspect, an embodiment of the present disclosure provides an electronic device, including:
a processor, and a memory communicatively connected to the processor;
the memory storing computer executable instructions;
the processor performing the computer executable instructions stored in the memory, which causes the processor to perform the method for service request processing according to the first aspect and plurality of possible designs of the first aspect.

According to a fourth aspect, an embodiment of the present disclosure provides a computer readable storage medium, wherein the computer readable storage medium stores computer executable instructions, when performed by a processor, implementing the method for service request processing according to the first aspect and various possible designs of the first aspect is implemented.

According to a fifth aspect, an embodiment of the present disclosure provides a computer program product, comprising a computer program, when performed by a processor, implementing the method for service request processing according to the first aspect and various possible designs of the first aspect.

According to a sixth aspect, an embodiment of the present disclosure provides a computer program, when performed by a processor, implementing the method for service request processing according to the first aspect and various possible designs of the first aspect.

Embodiments of the present disclosure provide a method, apparatus, electronic device and storage medium for service request processing, by obtaining a target account that is an account having a risk of initiating an unauthorized request to a target service, the target service having at least two service node; determining, based on the target account, a corresponding key service node, the key service node being a service node among the at least two service nodes that has a best interception effect for performing access interception on an unauthorized request initiated by the target account; performing, based on the key service node, access interception on a service request sent by the target account. Before intercepting the unauthorized request initiated by the target account, the key service node with better interception effect in the target service is evaluated, and then at the key service node, an access interception is performed on the unauthorized request initiated by the target account.

### BRIEF DESCRIPTION OF DRAWINGS

In order to provide a clearer explanation of the technical solutions of embodiments of the present disclosure or technologies in the prior art, a brief introduction will be given below to the accompanying drawings used for describing the embodiments or technologies in the prior art, it is obvious that the accompanying drawings in the following description are some embodiments of the present disclosure. and for those skilled in the art, other accompanying drawings can be obtained based on these accompanying drawings without any creative work.
FIG. 1 is an application scenario diagram of a method for service request processing according to an embodiment of the present disclosure;
FIG. 2 is a schematic flowchart 1 of a method for service request processing according to an embodiment of the present disclosure;
FIG. 3 is a flowchart of a specific implementation process of step S102 in the embodiment shown in FIG. 2;
FIG. 4 is a schematic diagram of performing access interception for a service node according to an embodiment of the present disclosure;
FIG. 5 is a flowchart of a specific implementation process of step S1022 in the embodiment shown in FIG. 3;
FIG. 6 is a flowchart of a specific implementation process of step S103 in the embodiment shown in FIG. 2;
FIG. 7 is a schematic flowchart 2 of a method for service request processing according to an embodiment of the present disclosure;
FIG. 8 is a schematic diagram of a behavior feature to an embodiment of the present disclosure;
FIG. 9 is a flowchart of a specific implementation process of step S207 in the embodiment shown in FIG. 7;
FIG. 10 is a structural block diagram of an apparatus for service request processing according to an embodiment of the present disclosure;
FIG. 11 is a schematic structural diagram of an electronic device according to an embodiment of the present disclosure;
FIG. 12 is a schematic hardware structure diagram of an electronic device according to an embodiment of the present disclosure.

### DETAILED DESCRIPTION

In order to make purposes, technical solutions and advantages of the embodiments of the present disclosure more apparent, the technical solutions in the embodiments of the present disclosure will be described below in a clearly and fully understandable way in combination with the drawings related to the embodiments of the present disclosure. It is obvious that the described embodiments are only a part but not all of the embodiments of the present disclosure. All other embodiments obtained by a person of ordinary skill in the art based on the embodiments of the present disclosure without creative efforts shall belong to the scope of protection of the present disclosure.

The following describes an application scenario of an embodiment of the present disclosure:

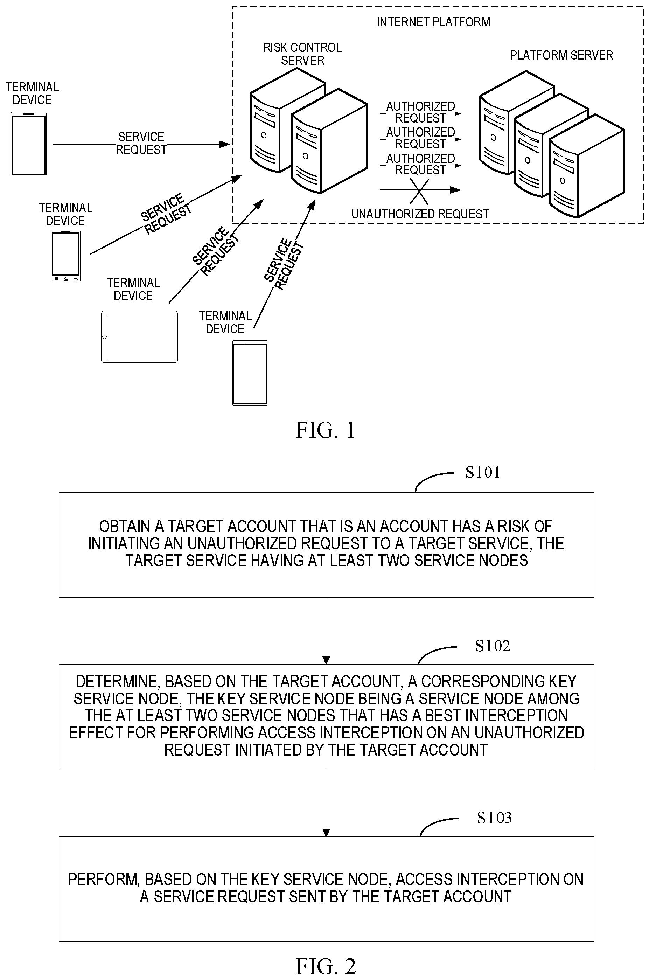

FIG. 1 is an application scenario diagram of a method for service request processing according to an embodiment of the present disclosure. The method for service request processing provided in the embodiments of the present disclosure may be applied to application scenarios of security protection and risk control management of Internet platforms, and more specifically, such as an application scenario of security protection for social platforms. By way of example, the method provided in the embodiments of the present disclosure may be applied to a risk control server. In a possible implementation, as shown in FIG. 1, the risk control server is connected to the platform server, an external request sent by the terminal device first enters the risk control server at first, and is processed by the risk control server to identify and intercept the unauthorized requests therein, and then normal authorized requests are sent to the platform server, and the platform server responds to the normal legal requests to generate platform content such as a user message and release information.

Currently, with rapid development of the Internet industry, unauthorized activities such as cyber attacks, information theft, ransomware scams and the like implemented by using Internet technologies are increasing, for example, promoting unauthorized websites, posting fraud information and the like on an Internet social platform, so that unauthorized income is obtained. The unauthorized activities above are performed usually by automatically sending the service request to the platform server by using the Internet technologies, so that accounts being registered on the Internet social platform in batches, and the accounts masquerading as real users to post unauthorized content. In the prior art, for a service request for implementing an unauthorized service, the social platform usually identified the service request based on a rule, and then an unauthorized account sending an unauthorized request is intercepted at a fixed service node to prevent such unauthorized accounts from continuing to send unauthorized requests. For example, after the request for posting fraud website is detected, the account for sending the unauthorized request is marked, and intercepts the account at the login service node of the account to prevent the account from logging in to the platform. However, the interception method based on fixed node is easy to be identified by the attacker sending the unauthorized request, and bypass the interception by modifying the sending parameter, resulting in poor interception effect and low interception accuracy.

The embodiments of the present disclosure provide a method for service request processing to solve the problem. Referring to FIG. 2, FIG. 2 is a schematic flowchart 1 of a method for service request processing according to an embodiment of the present disclosure. The method in this embodiment may be applied to a server, and the method for service request processing includes:
Step S101: obtain a target account that is an account having a risk of initiating an unauthorized request to a target service, the target service having at least two service nodes.

By way of example, a target account(s) is a subset of all accounts registered at the server, more specifically, unauthorized accounts in the above application scenario. The target account in this embodiment is aggregated accounts that are registered in batches by an attacker (unauthorizedly gang) and have similar features in one or more dimensions.

Furthermore, the target account may refer to an account which has a record of sending an unauthorized request, or has a possibility of sending an unauthorized request based on evaluation. The unauthorized request is a service request sending to a server including unauthorized content, and the unauthorized content is, for example, fraud information, unauthorized website information, and the like. After the unauthorized request is responded by the server, the unauthorized information is displayed on the corresponding network platform. The target account may be obtained based on account data predetermined in the server, or may be determined after real time detecting and evaluating of the service requests sent by different accounts, which is not specifically limited herein.

Furthermore, the unauthorized request initiated by the target account corresponds to the target service, and the target service is, for example, a service such as posting a status and posting a comment on a social platform. The target service has at least two service nodes, for example, the target service is posting a status on a social platform, and the service node corresponding to the target service includes: "account registration", "login account", "following friends", and "posting status". For example, in order to implement the target service (posting a status on a social platform), the target account needs to respectively send a service request to each of the service nodes, so as to finally implement the purpose of sending an unauthorized request to the target service (posting a status containing unauthorized content on a social platform).

Step S102: determine, based on the target account, a corresponding key service node, the key service node being a service node among the at least two service nodes that has a best interception effect for performing access interception on an unauthorized request initiated by the target account.

By way of example, after the target account is obtained, based on the feature of the target account, a corresponding key service node is determined, that is, the service node with the best interception effect when intercepting the unauthorized request initiated by the target account. In this embodiment, there may be a plurality of specific implementations of "the service node with the best interception effect", for example, a service node with the highest interception rate of unauthorized requests, for example, a service node with a minimum computing resource consumption during the interception process; furthermore, a service node having a maximum effective interception duration of intercepting unauthorized requests.

By way of example, the number of corresponding key service nodes is determined based on the features of the target account. In one example, the feature of the target accounts is the number of the target accounts, and based on the number of the target accounts, the corresponding key service node is determined. In another example, the feature of the target accounts is a historical interception record corresponding to the target account; and by obtaining a historical record for intercepting the target account, an effect of intercepting the target account on each of the service nodes is determined, so as the key service node is determined.

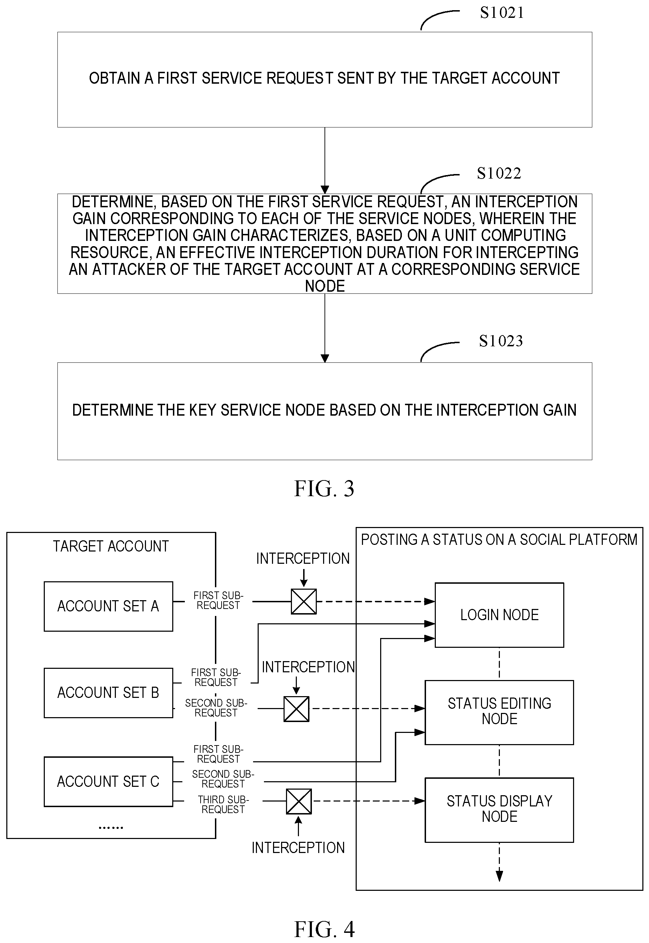

By way of example, as shown in FIG. 3, the specific implementation of step S102 includes:
Step S1021: obtain a first service request sent by the target account.

Step S1022: determine, based on the first service request, an interception gain corresponding to each of the service nodes, wherein the interception gain characterizes, based on a unit computing resource, an effective interception duration for intercepting an attacker of the target account at a corresponding service node.

By way of example, after determining the target account, the service request sent by the target account is detected. After detecting the first service request sent by the target account, the first service request is intercepted at different service nodes, and the interception effect, i.e., the interception gain, is evaluated. For example, based on the same computing resource, after performing interception at an A service node, 2 hours later, the attacker which sends the unauthorized request bypasses the access interception at the A service node by changing the parameter. After performing interception at a B service node, 8 hours later, the attacker which sends the unauthorized request bypasses the access interception at the B service node by changing the parameter. That is, the effective interception duration at the B service node is longer, and the interception gain is higher.

FIG. 4 is a schematic diagram of performing access interception for a service node according to an embodiment of the present disclosure. With reference to FIG. 4, a process of determining an interception gain corresponding to each of the service nodes is described below. As shown in FIG. 4, the target service is a service of "posting a status on a social platform", the target service includes a "login node", a "status editing node", and a "status display node". In order to achieve a purpose of posting a status on a social platform, a first service request needs to be sent to each of the service nodes ("login node", "status editing node", and "status display node") in sequence. The first service request includes three sub-requests, that is, a first sub-request for "login node"; a second sub-request for "status editing node"; and a third sub-request for "status display node". For example, the target account includes N accounts, N is an integer greater than 2, and the target account is divided into three account sets, which are an account set A, an account set B, and an account set C. When the target account is detected to send the service request, for each account in the account set A, the first service request sent to the "login node" is intercepted (that is, the first sub-request is intercepted), so that the accounts in the account set A is intercepted at the "login node", and account login cannot be performed; for each account in the account set B, access interception is not performed at the "login node", and the first service request sent to the "status editing node" is intercepted (that is, the second sub-request is intercepted), so that the accounts in the account set B is intercepted at the "status editing node", that is, account login can be performed, but the status content cannot be edited; for each account in the account set C, access interception is not performed at the "login node" or the "status editing node", and the first service request sent to the "status display node" is intercepted (that is, the third sub-request is intercepted), so that the accounts in the account set C is intercepted at the "status display node", that is, the accounts in the account set C can perform account login and editing status content, but cannot display the state content on the social platform.

Furthermore, after the above process is implemented, the target account is intercepted respectively at different service nodes, so that the target account cannot perform the solution for the target service. However, in practice, for the foregoing interception behavior, an attacker who sends an unauthorized request by using the target account may change a parameter in the sent service request by adjusting a modification program script and the like, for example, change a content keyword, login information, and the like in the service request, to avoid the interception, and achieve a purpose of normally triggering a target service (for example, posting a status containing unauthorized information on a social platform). However, for an access interception on different service nodes, time cost and computing resource cost of the attacker which sends the unauthorized request to identify the interception rule and avoid the interception are different. For example, after performing access interception at the "login node", the attacker may directly re-register a new account to initiate an attack through a program script, so the attacker avoids the time cost for intercepting and the computing resource cost is relatively low, that is, the effective interception duration is short; after performing access interception at the "status display node", the attacker needs to send the request to a plurality of nodes such as the "login node" and the "status editing node" in sequence through the target account, and at the same time, the attacker needs to analyze the reason and the rule why the unauthorized content unable to be displayed on the social platform to avoid the interception, thus more computing resource cost and time cost are required, that is, the effective interception duration is long. The above introduction is only an example, and in practice, the effective interception duration of intercepting the attacker which the target account belongs to at different service nodes is affected by various factors. Therefore, the interception gain corresponding to each of the service nodes may be determined by detecting the actual effective interception duration of each of the service nodes.

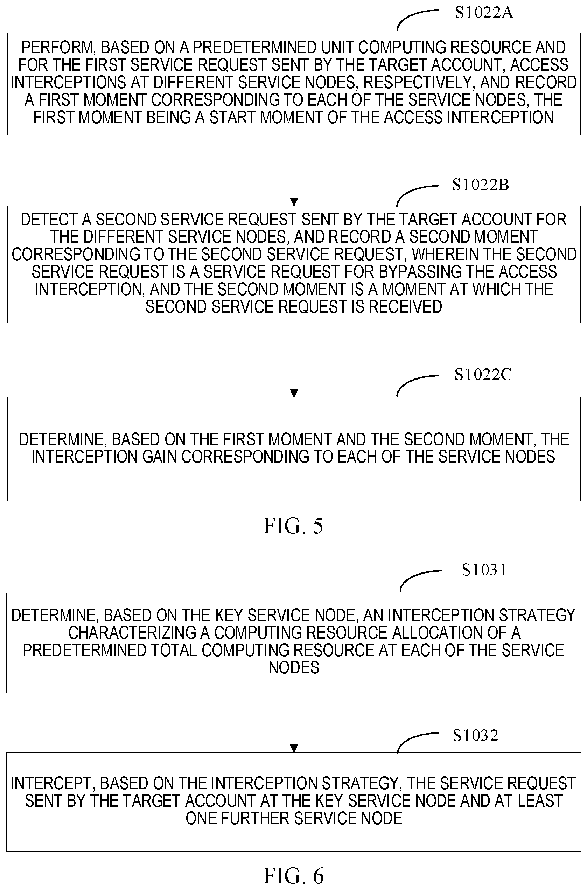

In a possible implementation, as shown in FIG. 5, an implementation of step S1022 includes:
Step S1022A: perform, based on a predetermined unit computing resource and for the first service request sent by the target account, access interceptions at different service nodes, respectively, and record a first moment corresponding to each of the service nodes, the first moment being a start moment of the access interception.

Step S1022B: detect a second service request sent by the target account for the different service nodes, and record a second moment corresponding to the second service request, wherein the second service request is a service request for bypassing the access interception, and the second moment is a moment at which the second service request is received.

Step S1022C: determine, based on the first moment and the second moment, the interception gain corresponding to each of the service nodes.

Step S1023: determine the key service node based on the interception gain.

By way of example, the computing resource includes, for example, a thread resource, a memory resource, a network resource, and the like, a unit computing resource, that is, a computing resource of a predetermined size, and is not specifically limited, and based on the unit computing resource, after intercepting a part of accounts in the target accounts at different service nodes, a corresponding time node is recorded, that is, the first moment; and then by detecting the second service request sent by the target account for each of the service nodes, a moment of receiving the second service request is obtained, that is, the second moment, and the second service request is the service request for bypassing the access interception. For example, the unauthorized information included in the first service request is "www.xxx.cn" (for example, a fraud website); the server intercepts the first service request at the "status display node", and replaces the unauthorized information "www.xxx.cn" with a character string "######"; then the attacker modifies the request parameter, modifies the unauthorized information "www.xxx.cn" to "www(/).xxx(/).cn(/)", and further generates the second service request based on the modified unauthorized information to avoid the server's identification of the unauthorized information "www.xxx.cn" in the first service request, thereby achieving the purpose of bypassing the access interception. Therefore, when the server, based on an artificial or pre-trained recognition model, detects content such as "www(/).xxx(/).cn(/)" in the service request, it is considered that the service request is the second service request. For specific recognition methods, details are not described herein again.

Then, based on the difference between the first moment and the second moment, the effective interception duration of the access interception at the corresponding service node may be determined, thereby the interception gain is obtained. Further, the service node with the largest interception gain is determined as the key service node.

In the steps of this embodiment, in the process of actually performing risk control detection, for the problems of the attack mode of the attacker continuously changing and bypassing the interception by modifying parameters, through continuously detecting the interception gain of each of the service nodes, the service node with the maximum interception gain is determined as the key service node. In the subsequent step, based on the key service node performing access interception for the unauthorized request initiating by the attacker, the network attack cost of the attacker is increased. Thereby, the interception efficiency of the unauthorized request is increased, and the utilization rate of the computing resources is increased.

Step S103, perform, based on the key service node, access interception on a service request sent by the target account.

By way of example, after determining the key service node, based on the key service node performing access interception on the service request sending by the target account, the interception efficiency is dynamically maximized. For example, when the key service node is a service node "following friends" in the social platform, the attacker may register the "target account" in batches through the program script, and perform operations such as user login and like by sending the service request, but cannot "following friends"; and after the attacker sends the unauthorized request again by modifying the parameters, the key service node may change accordingly based on the interception gains corresponding to each of the service nodes, for example, the key service node is changed to the service node "posting information" in the social platform, that is, the attacker may perform operations such as user login and following friends by sending the service request, but cannot post information. Therefore, dynamic access interception of the target account is realized.

In one possible implementation, as shown in FIG. 6, the specific implementation steps of step S103 include:
Step S1031: determine, based on the key service node, an interception strategy characterizing a computing resource allocation of a predetermined total computing resource at each of the service nodes.
Step S1032: intercept, based on the interception strategy, the service request sent by the target account at the key service node and at least one further service node.

By way of example, in an application scenario of security protection and risk control management for the Internet platform, the risk control server needs to process a large amount of request data in real time, and there are a plurality of attackers that send unauthorized requests to the platform at the same time. Therefore, the interception strategy of unauthorized requests needs to consider the overall computing resource allocation of the risk control server to ensure the real-time processing of the service requests. Specifically, after the key service node is determined, more computing resources may be allocated to the key service node, for example, for all target accounts, the access interception is only performed at the key service node; meanwhile, in other service nodes except the key service node in the target service, less computing resources are allocated, a part of accounts in the target accounts are intercepted at other service nodes, so that a more complex interception strategy is formed. On the basis of ensuring the interception reliability, cause the attacker spends more time and cost more to crack and parse the interception rule, so that the interception effect of the unauthorized request is further improved, and the problem that the problems of the attacker continuously changing the attack mode and modifying parameters to bypass the interception is solved. The interception strategy may be provided through a pre-trained processing model, that is, the target service and the key service node are used as inputs, and a corresponding interception strategy is output through a pre-trained processing model.

In this embodiment, by obtaining the target account that is an account having a risk of initiating an unauthorized request to the target service, and the target service has at least two service nodes; determine, based on the target account, a corresponding key service node, the key service node is a service node that has a best interception effect for performing access interception on an unauthorized request initiated by the target account; and perform, based on the key service node, access interception on a service request sent by the target account. Before intercepting the unauthorized request initiated by the target account, the key service node with better interception effect in the target service is evaluated, and then at the key service node, an access interception is performed on the unauthorized request initiated by the target account, the interception accuracy of the unauthorized request is improved, meanwhile, dynamic interception for the target account is formed, the difficulty of bypassing the interception by changing the access parameter of the target account is increased, and the efficiency of the computing resource is improved.

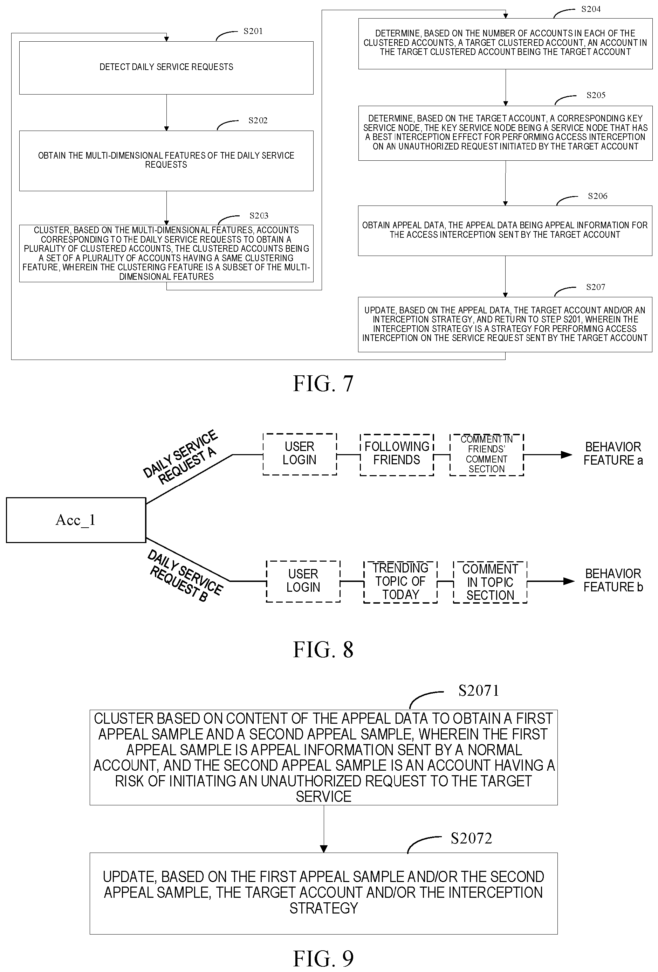

Referring to FIG. 7, FIG. 7 is a schematic flowchart 2 of a method for service request processing according to an embodiment of the present disclosure. Based on the embodiment shown in FIG. 2, this embodiment adds a step of determining a target account and updating an interception strategy based on appeal data, and the method for service request processing includes:
Step S201: detect a daily service request.
Step S202: obtain the multi-dimensional features of the daily service requests.

By way of example, in an application scenario for security protection and risk control management for the Internet platform, the risk control server, that is, the actor in this embodiment, may perform indiscriminate or random detection on service requests sent by the user to the risk control server through the terminal device, to obtain service requests, that is, daily service requests, sent by different accounts. Then, the multi-dimensional features corresponding to the daily service request are obtained, for example, the multi-dimensional features include at least two of the following: account features, device features, behavior features, or content features, and features are described in detail below.

The account feature, that is, a feature of an account sending the daily service request, for example, an account identifier (e.g., an account name, an account profile picture), an account creation time, account registration information (e.g., information of age, gender, residence, etc. setting in an account), or the like. In a possible implementation, the daily service requests may contain identification information of an account sending the requests, and the account feature may be further determined by using the identification information.

The device feature, that is, a feature of a device logged in by an account which sends the daily service requests, for example, a device identifier, a device model, a device login time, a device network address, or the like. In a possible implementation, the daily service requests may contain identification information of the device sending the requests, and the device feature may be further determined by using the identification information.

The behavior feature, the behavior feature characterizes an order of daily service requests sent by the same account for different service nodes, that is, an order of sending service requests to each of the service nodes of the target service, that is, triggers a time order of each of the service nodes. The behavior feature may be determined by using specific content information of a plurality of daily service requests. FIG. 8 is a schematic diagram of a behavior feature an embodiment of the present disclosure, as shown in FIG. 8, for example, for a specific account Acc_1, if the daily service request(s) A (a set of service requests) sent by the account sequentially triggers the "user login", "following friends", and "comment in friends' comment section" service nodes, the behavior feature corresponding to the daily service request A is a behavior feature a; and if the daily service request(s) B(a set of service requests) sent by the account sequentially triggers the "user login", "enter the trending topic", "comment in topic section" service nodes, the behavior feature corresponding to the daily service request B is a behavior feature b.

The content feature, that is, a feature of the content in the sent daily service request, for example, a specific keyword, and a sentence including the specific keyword, and/or the behavior content for the behavior feature, for example, the daily service request is used to trigger the service node "following friends", and the corresponding content feature is the account identifier of the friend to be followed. The content feature may be determined by using specific content information in the daily service request.

Furthermore, the multi-dimensional feature refers to a combination of at least two of the foregoing four features, and more specifically, the multi-dimensional feature may include a plurality of subclasses in each type of feature (the account feature, the device feature, the behavior feature, and the content feature), to obtain more combination of dimensions, for example, the multi-dimensional feature may include features of 500 dimensions, thereby a more accurate description for the service request is achieved.

Step S203: cluster, based on the multi-dimensional features, accounts corresponding to the daily service requests to obtain a plurality of clustered accounts, the clustered accounts being a set of a plurality of accounts having a same clustering feature, wherein the clustering feature is a subset of the multi-dimensional features.

Step S204: determine, based on the number of accounts in each of the clustered accounts, a target clustered account, an account in the target clustered account being the target account.

By way of example, the multi-dimensional feature is equivalent to description information of the daily service request, and the more the amount of dimension is, the more accurate the description information is. Specifically, for the daily service request sent by a normal account, since there is a difference between the manner and the purpose of using the Internet platform by different users, the feature of the daily service request sent by the user in the multiple dimensions is thereby random, and therefore, for the daily service request sent by the normal account, it is usually not concentrated under the same multi-dimensional feature. For an unauthorized account (target account) registered by an attacker using a program script, an unauthorized request sent by the attacker is driven based on the program script, and therefore, under a multi-dimensional feature formed by some dimensions, a high degree of aggregation is formed. For example, logging in at a same time (device feature), having a mutual friend (account feature), having a same service node triggering order (behavior feature), and leaving a same comment (content feature). Therefore, based on the multi-dimensional feature corresponding to the daily service request, the accounts corresponding to the daily service request with the same multi-dimensional feature are clustered to obtain the cluster accounts. Then, the number of clustered accounts is evaluated, and when the number of the clustered accounts is greater than a predetermined value, it is determined that the account in the clustered account is abnormal, and there is a risk of initiating an unauthorized request, that is, the target account.

In this embodiment, by detecting the daily service request, the daily service request is comprehensively analyzed from multiple dimensions, and the unauthorized request generated by the program script and the authorized service request sent by the ordinary account are accurately distinguished based on the aggregation degree of the multi-dimensional features of the daily service request, thereby realizing accurate positioning of the target account. Problem is avoided, wherein the problem is that the target account cannot be accurately located because the attacker changes the request parameters in the solution of judging the target account based on expert experience in the prior art. Thereby, the detection accuracy of the unauthorized account is improved.

Step S205: determine, based on the target account, a corresponding key service node, the key service node being a service node that has a best interception effect for performing access interception on an unauthorized request initiated by the target account.

Step S206: obtain appeal data, the appeal data being appeal information for the access interception sent by the target account.

Step S207: update, based on the appeal data, the target account and/or an interception strategy, and return to step S201, wherein the interception strategy is a strategy for performing access interception on the service request sent by the target account.

By way of example, after the key service node is determined, an access interception is performed on the target account based on the key service node, to protect the system ecology. However, at the same time, there may still be a partial mis-interception request, resulting in intercepting a service request of an authorized user, and the service node cannot be triggered normally. Then, some users may initiate an appeal request for the mis-interception, and meanwhile, the attacker may send a false appeal request to the server based on the target account by using a program script. Appeal data, that is, a set of appeal information submitted to the Internet platform for the target account, and after obtaining the appeal data, the server analyzes the appeal data, and could determine the real appeal information that is sent by the user and reflects the mis-interception condition, also could determine the false appeal information sent by using the program script. Afterwards, the processing model providing the interception strategy is further trained by using the real appeal information and the false appeal information, so that the target account previously determined as the unauthorized account is updated, and / or the interception strategy for the target account is updated, wherein the specific implementation of the interception strategy may refer to the related description in the embodiment shown in FIG. 6, and details are not described herein again.

By way of example, as shown in FIG. 9, the specific implementation of step S207 includes:
Step S2071: cluster based on content of the appeal data to obtain a first appeal sample and a second appeal sample, wherein the first appeal sample is appeal information sent by a normal account, and the second appeal sample is an account having a risk of initiating an unauthorized request to the target service.
Step S2072: update, based on the first appeal sample and/or the second appeal sample, the target account and/or the interception strategy.

By way of example, after obtaining the appeal data, based on the content of each appeal information in the appeal data, for example, the appeal information includes a content item of "appeal reason description", text clustering is performed for the "appeal reason description", outliers are excluded, and non-outlier are automatically marked as valid appeal information, that is, a first appeal sample, and other outliers are marked as second appeal samples. Then, the account corresponding to the first appeal sample is marked as a white sample, based on the white sample, the processing model providing the interception strategy is trained, automatic optimization and iteration of the interception strategy are completed, and the accuracy and rationality of the interception strategy are improved.

In this embodiment, the implementation of step S205 is the same as the implementation of step S102 in the embodiment shown in FIG. 2 of this present disclosure, and details are not described herein again.

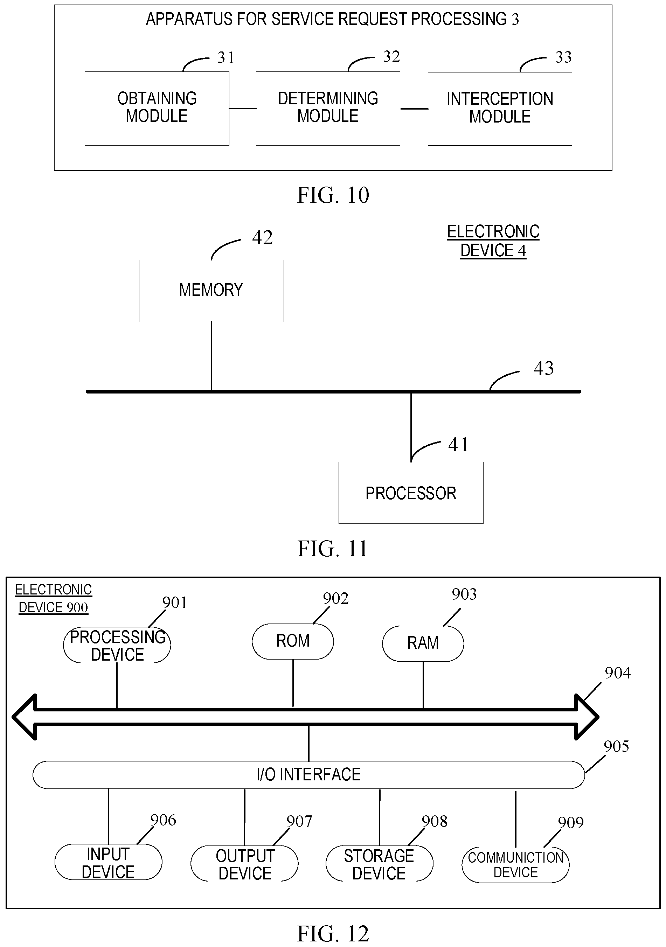

Corresponding to the method for service request processing in the foregoing embodiments, FIG. 10 is a structural block diagram of an apparatus for service request processing according to an embodiment of the present disclosure. For ease of illustration, only portions related to embodiments of the present disclosure are shown. Referring to FIG. 10, the apparatus for service request processing 3 includes:
obtaining module 31 configured for obtaining a target account that is an account having a risk of initiating an unauthorized request to a target service, the target service having at least two service nodes;
determining module 32 configured for determining, based on the target account, a corresponding key service node, the key service node being a service node among the at least two service nodes that has a best interception effect for performing access interception on an unauthorized request initiated by the target account;
interception module 33 configured for performing, based on the key service node, access interception on a service request sent by the target account.

In an embodiment of the present disclosure, the determining module 32 is specifically configured for: obtaining a first service request sent by the target account; determining, based on the first service request, an interception gain corresponding to each of the service nodes, wherein the interception gain characterizes, based on a unit computing resource, an effective interception duration for intercepting an attacker of the target account at a corresponding service node; and determining, based on the interception gain, the key service node.

In an embodiment of the present disclosure, when determining the interception gain corresponding to each of the service nodes based on the first service request, the determining module 32 is specifically configured for: performing, based on a predetermined unit computing resource and for the first service request sent by the target account, access interceptions at different service nodes, respectively, and recording a first moment corresponding to each of the service nodes, the first moment being a start moment of the access interception; detecting a second service request sent by the target account for the different service nodes, and recording a second moment corresponding to the second service request, wherein the second service request is a service request for bypassing the access interception, and the second moment is a moment at which the second service request is received; and determining, based on the first moment and the second moment, the interception gain corresponding to each of the service nodes.

In an embodiment of the present disclosure, the interception module 33 is specifically configured for: determining, based on the key service node, an interception strategy characterizing a computing resource allocation of a predetermined total computing resource at each of the service nodes; and intercepting, based on the interception strategy, the service request sent by the target account at the key service node and at least one further service node.

In an embodiment of the present disclosure, the obtaining module 31 is specifically configured for: identifying the target account based on multi-dimensional features of daily service requests.

In an embodiment of the present disclosure, when identifying the target account based on the multi-dimensional features of the daily service requests, the obtaining module 31 is specifically configured for: obtaining the multi-dimensional features of the daily service requests; clustering, based on the multi-dimensional features, accounts corresponding to the daily service requests to obtain a plurality of clustered accounts, the clustered accounts being a set of a plurality of accounts having a same clustering feature, wherein the clustering feature is a subset of the multi-dimensional features; and determining, based on the number of accounts in each of the clustered accounts, a target clustered account, an account in the target clustered account being the target account.

In an embodiment of the present disclosure, the multi-dimensional feature includes at least two of: an account feature, a device feature, a behavior feature, or a content feature.

In an embodiment of the present disclosure, the obtaining module 31 is further configured for: obtaining appeal data, the appeal data being appeal information for the access interception sent by the target account; and updating, based on the appeal data, the target account and/or an interception strategy, wherein the interception strategy is a strategy for performing access interception on the service request sent by the target account.

In an embodiment of the present disclosure, when the obtaining module 31 updates the target account and/or the interception strategy based on the appeal data, the obtaining module 31 is specifically configured for: clustering based on content of the appeal data to obtain a first appeal sample and a second appeal sample, wherein the first appeal sample is appeal information sent by a normal account, and the second appeal sample is an account having a risk of initiating an unauthorized request to the target service; and updating, based on the first appeal sample and/or the second appeal sample, the target account and/or the interception strategy.

The obtaining module 31, the determining module 32, and the intercepting module 33 are connected in sequence. The apparatus for service request processing 3 provided in this embodiment may perform the technical solutions of the foregoing method embodiments, and implementation principles and technical effects are similar, and details are not described herein again in this embodiment.

FIG. 11 is a schematic structural diagram of an electronic device according to an embodiment of the present disclosure. As shown in FIG. 11, the electronic device 3 comprises:
a processor 41, and a memory 42 communicatively connected to the processor 41;
the memory 42 storing computer executable instructions;
the processor 41 performing the computer-executable instructions stored in the memory 42, which causes the processor to perform the method for service request in the embodiments shown in FIG. 2 to FIG. 9.

Alternatively, the processor 41 and the memory 42 are connected via a bus 43.

Related descriptions may be understood with reference to related descriptions and effects corresponding to the steps in the embodiments shown in FIG. 2 to FIG. 9, and details are not described herein again.

FIG. 12 shows a schematic structural diagram of an electronic device 900 suitable for implementing embodiments of the present disclosure, and the electronic device 900 may be a terminal device or a server. The terminal device may include, but is not limited to, a mobile terminal such as a mobile phone, a laptop computer, a digital broadcast receiver, a personal digital assistant (PDA), a portable android device (PAD), a portable media player (PMP), a vehicle-mounted terminal (for example, a vehicle-mounted navigation terminal), and the like, and a fixed terminal such as a digital television (TV), a desktop computer, and the like. The electronic device shown in FIG. 12 is merely an example and should not cast any limitation to the functions and scope of use of the embodiments of the present disclosure.

As shown in FIG. 12, the electronic device 900 may include a processing device (e.g., a central processing unit, a graphics processor, etc.) 901, that may perform various suitable actions and processes in accordance with a program stored in a read only memory (ROM) 902 or a program loaded into a random access memory (RAM) 903 from a storage device 908. Various programs and data required for the operation of the electronic device 900 are also stored in the RAM 903. The processing device 901, the ROM 902, and the RAM 903 are connected to each other via a bus 904. An input/output (I/O) interface 905 is also connected to the bus 904.

In general, the following device may be connected to the I/O interface 905: an input device 906 including, for example, a touchscreen, a touchpad, a keyboard, a mouse, a camera, a microphone, an accelerometer, a gyroscope, or the like; an output device 907 including, for example, a liquid crystal display (LCD), a speaker, a vibrator, or the like; a storage device 908 including, for example, a magnetic tape, a hard disk, or the like; and a communication device 909. The communication device 909 may enable the electronic device 900 to wirelessly or wired communicate with other devices to exchange data. Although FIG. 12 shows the electronic device 900 comprising various devices, it should be understood that it is not required that all of the devices shown in the figure shall be implemented or equipped. More or fewer devices may be alternatively implemented or equipped.

In particular, in accordance with embodiments of the present disclosure, the processes described above with reference to the flowcharts may be implemented as a computer software program. For example, embodiments of the present disclosure include a computer program product comprising a computer program carried on a computer readable medium. The computer program comprises program code for executing the method as shown in the flowchart. In such an embodiment, the computer program may be downloaded and installed from the network via the communication device 909, or installed from storage device 908, or installed from ROM 902. When the computer program is executed by the processing device 901, the above-described functions defined in the method of embodiments of the present disclosure are executed.

It should be noted that the computer readable medium in the present disclosure may be a computer readable signal medium or a computer readable storage medium, or any combination thereof. A computer-readable storage medium may be, for example, but not limited to, an electronic, magnetic, optical, electromagnetic, infrared, or semiconductor system, apparatus, or device, or any suitable combination thereof. More specific examples of the computer readable storage medium may include, but are not limited to, an electrical connection having one or more wires, a portable computer diskette, a hard disk, a random access memory (RAM), a read-only memory (ROM), an erasable programmable read-only memory (EPROM), or a flash memory, an optical fiber, a compact disc read only memory (CD-ROM), an optical storage device, a magnetic storage device, or any suitable combination of the foregoing. In the present disclosure, a computer readable storage medium may be any tangible medium that may contain or store a program for use by or in connection with an instruction execution system, apparatus, or device. While in the present disclosure, a computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may also be any computer readable medium that is not a computer readable storage medium and that may communicate, propagate, or transport a program for use by or in connection with an instruction execution system, apparatus, or device. Program code embodied on a computer readable medium may be transmitted using any appropriate medium, including, but not limited to, wireline, optical fiber cable, Radio Frequency (RF), etc., or any suitable combination of the foregoing.

The computer readable medium may be included in the electronic device, or may exist separately and not be installed in the electronic device.

The computer readable medium carries one or more programs which when being executed by the electronic device, cause the electronic device to execute the method illustrated in the above-mentioned embodiments.

Computer program code for carrying out operations for aspects of the present disclosure may be written in any combination of one or more programming languages, including an object-oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, may be implemented by special purpose hardware-based systems that perform the specified functions or acts, or combinations of special purpose hardware and computer instructions.

The unit(s) involved in the embodiments of the present disclosure may be implemented through software or hardware. The name of a unit does not constitute a limitation to the unit itself in some cases, for example, the first acquisition unit may also be described as "unit to acquire at least two internet protocol addresses".

The functions described herein above may be performed, at least in part, by one or more hardware logic components. For example, without limitation, example types of hardware logic components that may be used include Field-programmable Gate Arrays (FPGAs), Application Specific Integrated Circuits (ASICs), Application Specific Standard Parts (ASSPs), System-On-chip systems (SOCs), Complex Programmable Logic Devices (CPLDs), etc.

In the context of this disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media would include an electrical connection based on one or more wires, a portable computer diskette, a hard disk, a random access memory (RAM), a read-only memory (ROM), an erasable programmable read-only memory (EPROM or Flash memory), an optical fiber, a compact disc read-only memory (CD-ROM), an optical storage device, a magnetic storage device, or any suitable combination of the foregoing.

According to a first aspect, a method for service request processing is provided based on one or more embodiments of the present disclosure, including:
obtaining a target account that is an account having a risk of initiating an unauthorized request to a target service, the target service having at least two service nodes; determining, based on the target account, a corresponding key service node, the key service node being a service node among the at least two service nodes that has a best interception effect for performing access interception on an unauthorized request initiated by the target account; and performing, based on the key service node, access interception on a service request sent by the target account.

According to one or more embodiments of the present disclosure, determining the corresponding key service node based on the target account includes: obtaining a first service request sent by the target account; determining, based on the first service request, an interception gain corresponding to each of the service nodes, wherein the interception gain characterizes, based on a unit computing resource, an effective interception duration for intercepting an attacker of the target account at a corresponding service node; and determining, based on the interception gain, the key service node.

According to one or more embodiments of the present disclosure, determining the interception gain corresponding to each of the service nodes based on the first service request includes: performing, based on a predetermined unit computing resource and for the first service request sent by the target account, access interceptions at different service nodes, respectively, and recording a first moment corresponding to each of the service nodes, the first moment being a start moment of the access interception; detecting a second service request sent by the target account for the different service nodes, and recording a second moment corresponding to the second service request, wherein the second service request is a service request for bypassing the access interception, and the second moment is a moment at which the second service request is received; and determining, based on the first moment and the second moment, the interception gain corresponding to each of the service nodes.

According to one or more embodiments of the present disclosure, performing, based on the key service node, access interception on the service request sent by the target account includes: determining, based on the key service node, an interception strategy characterizing a computing resource allocation of a predetermined total computing resource at each of the service nodes; and intercepting, based on the interception strategy, the service request sent by the target account at the key service node and at least one further service node.

According to one or more embodiments of the present disclosure, obtaining the target account includes: identifying the target account based on multi-dimensional features of daily service requests.

According to one or more embodiments of the present disclosure, identifying the target account based on the multi-dimensional features of the daily service requests includes: obtaining the multi-dimensional features of the daily service requests; clustering, based on the multi-dimensional features, accounts corresponding to the daily service requests to obtain a plurality of clustered accounts, the clustered accounts being a set of a plurality of accounts having a same clustering feature, wherein the clustering feature is a subset of the multi-dimensional features; and determining, based on the number of accounts in each of the clustered accounts, a target clustered account, an account in the target clustered account being the target account.

According to one or more embodiments of the present disclosure, the multi-dimensional features include at least two of the following: an account feature, a device feature, a behavior feature, or a content feature.

According to one or more embodiments of the present disclosure, the method further comprises: obtaining appeal data, the appeal data being appeal information for the access interception sent by the target account; and updating, based on the appeal data, the target account and/or an interception strategy, wherein the interception strategy is a strategy for performing access interception on the service request sent by the target account.

According to one or more embodiments of the present disclosure, updating the target account and/or the interception strategy based on the appeal data comprises: clustering based on content of the appeal data to obtain a first appeal sample and a second appeal sample, wherein the first appeal sample is appeal information sent by a normal account, and the second appeal sample is an account having a risk of initiating an unauthorized request to the target service; and updating, based on the first appeal sample and/or the second appeal sample, the target account and/or the interception strategy.

According to a second aspect, an apparatus for service request processing is provided based on one or more embodiments of the present disclosure, including:
an obtaining module, configured for obtaining a target account that is an account having a risk of initiating an unauthorized request to a target service, the target service having at least two service nodes;
a determining module, configured for determining, based on the target account, a corresponding key service node, the key service node being a service node among the at least two service nodes that has a best interception effect for performing access interception on an unauthorized request initiated by the target account;
an interception module, configured for performing, based on the key service node, access interception on a service request sent by the target account.

According to one or more embodiments of the present disclosure, the determining module is specifically configured for: obtaining a first service request sent by the target account; determining, based on the first service request, an interception gain corresponding to each of the service nodes, wherein the interception gain characterizes, based on a unit computing resource, an effective interception duration for intercepting an attacker of the target account at a corresponding service node; and determining, based on the interception gain, the key service node.

According to one or more embodiments of the present disclosure, when determining the interception gain corresponding to each of the service nodes based on the first service request, the determining module is specifically configured for: performing, based on a predetermined unit computing resource and for the first service request sent by the target account, access interceptions at different service nodes, respectively, and recording a first moment corresponding to each of the service nodes, the first moment being a start moment of the access interception; detecting a second service request sent by the target account for the different service nodes, and recording a second moment corresponding to the second service request, wherein the second service request is a service request for bypassing the access interception, and the second moment is a moment at which the second service request is received; and determining, based on the first moment and the second moment, the interception gain corresponding to each of the service nodes.

According to one or more embodiments of the present disclosure, the interception module is specifically configured for: determining, based on the key service node, an interception strategy characterizing a computing resource allocation of a predetermined total computing resource at each of the service nodes; and intercepting, based on the interception strategy, the service request sent by the target account at the key service node and at least one further service node.

According to one or more embodiments of the present disclosure, the obtaining module is specifically configured for: detecting a daily service request; and identifying the target account based on multi-dimensional features of the daily service request.

According to one or more embodiments of the present disclosure, when identifying a target account based on the multi-dimensional feature of the daily service request, the obtaining module is specifically configured for: obtaining the multi-dimensional features of the daily service requests; clustering, based on the multi-dimensional features, accounts corresponding to the daily service requests to obtain a plurality of clustered accounts, the clustered accounts being a set of a plurality of accounts having a same clustering feature, wherein the clustering feature is a subset of the multi-dimensional features; and determining, based on the number of accounts in each of the clustered accounts, a target clustered account, an account in the target clustered account being the target account.

According to one or more embodiments of the present disclosure, the multi-dimensional features includes at least two of the following: an account feature, a device feature, a behavior feature, or a content feature.

According to one or more embodiments of the present disclosure, the obtaining module is further configured for: obtaining appeal data, the appeal data being appeal information for the access interception sent by the target account; and updating, based on the appeal data, the target account and/or an interception strategy, wherein the interception strategy is a strategy for performing access interception on the service request sent by the target account.

According to one or more embodiments of the present disclosure, when updating the target account and/or the interception strategy based on the appeal data, the obtaining module is specifically configured for: clustering based on content of the appeal data to obtain a first appeal sample and a second appeal sample, wherein the first appeal sample is appeal information sent by a normal account, and the second appeal sample is an account having a risk of initiating an unauthorized request to the target service; and updating, based on the first appeal sample and/or the second appeal sample, the target account and/or the interception strategy.

According to a third aspect, an electronic device is provided based on one or more embodiments of the present disclosure, including: a processor, and a memory communicatively connected to the processor;
the memory storing computer executable instructions;
the processor executes the computer executable instructions stored in the memory, which causes the processor to perform the method for service request processing in accordance with the first aspect and various possible designs of the first aspect.

According to a fourth aspect, a computer readable storage medium is provided based on one or more embodiments of the present disclosure, wherein the computer readable storage medium stores computer executable instructions, and when performed by a processor, implementing the method for service request processing in accordance with the first aspect and various possible designs of the first aspect is implemented.

According to a fifth aspect, an embodiment of the present disclosure provides a computer program product, including a computer program, wherein the computer program, performed by a processor, implementing the method for service request processing in accordance with the first aspect and various possible designs of the first aspect.

According to a sixth aspect, an embodiment of the present disclosure provides a computer program, wherein the computer program, when performed by a processor, implementing the method for service request processing in accordance with the first aspect and various possible designs of the first aspect.

The foregoing description is merely illustrative of the preferred embodiments of the present disclosure and of the technical principles applied thereto, as will be appreciated by those skilled in the art. The disclosure of the present disclosure is not limited to the technical solution formed by the specific combination of the described technical features. At the same time, it should also cover other technical solutions formed by any combination of the described technical features or equivalent features thereof without departing from the described disclosed concept. For example, the above features and technical features having similar functions disclosed in the present disclosure (but not limited thereto) are replaced with each other to form a technical solution.

In addition, while operations are depicted in a particular order, this should not be understood as requiring that the operations be performed in the particular order shown or in sequential order. Multitasking and parallel processing may be advantageous in certain circumstances. Likewise, while several specific implementation details are included in the above discussion, these should not be construed as limiting the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or methodological acts, it is to be understood that the subject matter defined in the appended claims is not necessarily limited to the specific features or acts described above. On the contrary, the specific features and acts described above are merely example forms of implementing the claims.

## Claims

1. A method for service request processing, comprising:
obtaining a target account that is an account having a risk of initiating an unauthorized request to a target service, the target service having at least two service nodes;
determining, based on the target account, a corresponding key service node, the key service node being a service node among the at least two service nodes that has a best interception effect for performing access interception on an unauthorized request initiated by the target account;
performing, based on the key service node, access interception on a service request sent by the target account.

2. The method of claim 1, wherein determining the corresponding key service node based on the target account comprises:
obtaining a first service request sent by the target account;
determining, based on the first service request, an interception gain corresponding to each of the service nodes, wherein the interception gain characterizes, based on a unit computing resource, an effective interception duration for intercepting an attacker of the target account at a corresponding service node;
determining, based on the interception gain, the key service node.

3. The method of claim 2, wherein determining the interception gain corresponding to each of the service nodes based on the first service request comprises:
performing, based on a predetermined unit computing resource and for the first service request sent by the target account, access interceptions at different service nodes, respectively, and recording a first moment corresponding to each of the service nodes, the first moment being a start moment of the access interception;
detecting a second service request sent by the target account for the different service nodes, and recording a second moment corresponding to the second service request, wherein the second service request is a service request for bypassing the access interception, and the second moment is a moment at which the second service request is received;
determining, based on the first moment and the second moment, the interception gain corresponding to each of the service nodes.

4. The method of any of claims 1 to 3, wherein performing, based on the key service node, access interception on the service request sent by the target account comprises:
determining, based on the key service node, an interception strategy characterizing a computing resource allocation of a predetermined total computing resource at each of the service nodes;
intercepting, based on the interception strategy, the service request sent by the target account at the key service node and at least one further service node.

5. The method of any of claims 1 to 4, wherein obtaining the target account comprises:
identifying the target account based on multi-dimensional features of daily service requests.

6. The method of claim 5, wherein identifying the target account based on the multi-dimensional features of the daily service requests comprises:
obtaining the multi-dimensional features of the daily service requests;
clustering, based on the multi-dimensional features, accounts corresponding to the daily service requests to obtain a plurality of clustered accounts, the clustered accounts being a set of a plurality of accounts having a same clustering feature, wherein the clustering feature is a subset of the multi-dimensional features;
determining, based on the number of accounts in each of the clustered accounts, a target clustered account, an account in the target clustered account being the target account.

7. The method of claim 5 or 6, wherein the multi-dimensional features comprise at least two of:
an account feature, a device feature, a behavior feature, or a content feature.

8. The method of any of claims 1 to 7, further comprising:
obtaining appeal data, the appeal data being appeal information for the access interception sent by the target account;
updating, based on the appeal data, the target account and/or an interception strategy, wherein the interception strategy is a strategy for performing access interception on the service request sent by the target account.

9. The method of claim 8, wherein updating the target account and/or the interception strategy based on the appeal data comprises:
clustering based on content of the appeal data to obtain a first appeal sample and a second appeal sample, wherein the first appeal sample is appeal information sent by a normal account, and the second appeal sample is an account having a risk of initiating an unauthorized request to the target service;
updating, based on the first appeal sample and/or the second appeal sample, the target account and/or the interception strategy.

10. An apparatus for service request processing, comprising:
an obtaining module, configured for obtaining a target account that is an account having a risk of initiating an unauthorized request to a target service, the target service having at least two service nodes;
a determining module, configured for determining, based on the target account, a corresponding key service node, the key service node being a service node among the at least two service nodes that has a best interception effect for performing access interception on an unauthorized request initiated by the target account;
an interception module, configured for performing, based on the key service node, access interception on a service request sent by the target account.

11. An electronic device, comprising: a processor, and a memory communicatively connected to the processor,
the memory storing computer executable instructions;
the processor performing the computer executable instructions stored in the memory, which causes the processor to perform the method for service request processing of any of claims 1 to 9.

12. A computer readable storage medium, wherein the computer readable storage medium stores computer executable instructions, when performed by a processor, implementing the method for service request processing of any of claims 1 to 9.

13. A computer program product, comprising a computer program, when performed by a processor, implementing the method for service request processing of any of claims 1 to 9.

14. A computer program, when performed by a processor, implementing the method for service request processing of any of claims 1 to 9.
